Europäisches Patentamt

European Patent Office

Office européen des brevets

(11) Numéro de publication: **0 288 383 B1**

# FASCICULE DE BREVET EUROPEEN

(45) Date de publication de fascicule du brevet: **15.04.92**   (51) Int. Cl.⁵: **A47J 25/00**

(21) Numéro de dépôt: **88400965.5**

(22) Date de dépôt: **20.04.88**

(54) **Dispositif pour la réalisation de fonds à garnir à partir de légumes et/ou de fruits.**

(30) Priorité: **22.04.87 FR 8705695**

(43) Date de publication de la demande:
**26.10.88 Bulletin 88/43**

(45) Mention de la délivrance du brevet:
**15.04.92 Bulletin 92/16**

(84) Etats contractants désignés:
**AT BE CH DE ES FR GB GR IT LI LU NL SE**

(56) Documents cités:
**FR-A- 2 358 839**
**FR-A- 2 449 412**
**US-A- 1 669 960**
**US-A- 2 117 278**

(73) Titulaire: **Fischer, Gérard**
**Moulin Rateau**
**F-89260 Saint Martin sur Oreuse(FR)**

(72) Inventeur: **Fischer, Gérard**
**Moulin Rateau**
**F-89260 Saint Martin sur Oreuse(FR)**

(74) Mandataire: **Kügele, Bernhard et al**
**NOVAPAT-CABINET CHEREAU 63 bis, boulevard Bessières**
**F-75017 Paris(FR)**

## Description

La présente invention a pour objet un dispositif pour la préparation de fonds de matières alimentaires et le produit ainsi obtenu.

Dans les sciences et technologies alimentaires, on connaît des fonds à garnir réalisés à partir de pâte notamment du type pâte feuilletée dans lesquels on peut disposer des aliments salés, sucrés, chauds ou froids.

Il est certain que de tels canapés réalisés à partir de pâte feuilletée peuvent convenir pour certaines préparations mais il apparaît difficile de les accorder avec des purées de légumes ou des compotes de fruits.

C'est ainsi qu'il existe des fonds à garnir réalisés dans des fruits ou dans des légumes que l'on complète avec la purée ou la compote correspondante ou complémentaire.

Ces fonds sont obtenus par tranchage de cylindre cube ou autre forme géométrique à même le fruit ou le légume que l'on évide manuellement à l'aide d'une cuillère.

Un tel procédé artisanal peut se pratiquer à la demande dans le domaine de la restauration à petite échelle ou dans le milieu familial mais ne présente pas la rentabilité souhaitée pour une restauration inportante ou un usage industriel. Le produit obtenu n'est pas de qualité constante notamment dans ses dimensions.

La présente invention a donc pour but de proposer un dispositif pour la préparation de fonds à garnir en matière alimentaire notamment de fonds de légumes, de fruits, de charcuterie ou de fromages qui se caractérise en ce que le moyen de détachement est constitué d'au moins un des mécanismes suivants :

- un moyen de coupe transversal comportant au moins une lame se déplaçant dans une direction perpendiculaire au déplacement de l'élément tranchant tubulaire et traversant la paroi latérale de l'évidement créée par le déplacement dudit élément tubulaire;

- un moyen de dépression coopérant avec une partie supérieure de l'élément tranchant tubulaire afin de créer une dépression permettant d'enlever ledit noyau lors de la rétraction de l'élément tubulaire hors de la matière à découper, et

- une configuration particulière de la surface intérieure de l'élément tubulaire comportant des dents, orienté dans la direction de la rétraction de l'élément tubulaire.

Selon une forme de réalisation particulière, le dispositif comprend deux éléments tubulaires coaxiaux intérieur et extérieur, l'élément intérieur étant mobile par rapport à l'élément extérieur et une lame déplaçable par translation sur un support fixé à la patte elle-même solidaire de l'élément extérieur, l'axe longitudinal du support étant perpendiculaire à l'axe longitudinal des éléments tubulaires intérieur et/ou extérieur.

Dans cette forme de réalisation, la lame traverse par translation l'élément tubulaire extérieur à travers une fente munie de chanfreins, passe sous l'élément tubulaire intérieur, sa course de translation étant inférieure à la dimension transversale de l'élément tubulaire extérieur.

L'élément tubulaire intérieur est muni d'une garde qui vient en butée sur une entretoise elle-même en appui sur le rebord de l'élément tubulaire extérieur.

Les deux éléments tubulaires en butée l'un par rapport à l'autre peuvent présenter une différence de hauteur égale à l'épaisseur du fonds à garnir.

Les éléments tubulaires peuvent aussi présenter un léger angle de conicité afin de faciliter le dégagement du noyau et du fond à garnir.

La forme de section de l'élément tubulaire intérieure et/ou extérieure peut être ronde, carrée, un losange ou toute autre forme décorative.

Dans une autre forme de réalisation de la présente invention le dispositif comprend un moyen de maintien pour la matière à couper, notamment un légume ou un fruit, comportant un cylindre rigide et un revêtement élastique à l'intérieur du cylindre, ledit moyen de maintien étant capable de maintenir le fruit ou légume pendant l'action de l'élément tubulaire tranchant, un moyen de piston étant prévu, capable d'insérer et/ou ressortir ledit fruit ou légume du moyen de maintien.

Le bord tranchant de l'élément tubulaire peut comporter des dents de scie.

La lame peut comporter plusieurs éléments de coupe qui pénètrent la découpe au niveau de la hauteur du fond de la découpe par des endroits séparés les uns des autres. Cette lame peut comporter trois ou plusieurs éléments de coupe.

La présente invention se réfère également à des fonds à garnir pour plats chauds ou froids réalisés à partir des fruits ou légumes, fonds à garnir qui sont produits par un dispositif comme selon la présente invention.

Selon une forme de réalisation particulière, ces fonds à garnir comportent des parois verticales dans la découpe qui comportent au moins une fente sensiblement parallèle au plan du fond.

Les avantages sont nombreux à commencer par la présentation identique de produits réalisés avec un gain de temps important. Le dispositif est sûr et facile à manoeuvrer. On peut obtenir toutes les formes décoratives souhaitées. La partie de matière alimentaire découpée ou noyau est utilisable pour la fabrication de purées ou de tranches brisées. Le produit présente toutes les facilités pour être congelé ou bien pour subir des traitements de conservation des produits semi-frais par emballage sous vide.

L'invention sera mieux comprise à la lecture de la description qui va suivre, relative à des modes de réalisation particuliers non limitatifs, en regard des dessins annexés dont la

Figure 1 est une vue en coupe d'un dispositif suivant la présente invention, la

Figure 2 est une forme de réalisation particulière de la lame transversale; la

Figure 3 est une vue en coupe du moyen de maintien; la

Figure 4 est une vue en coupe de l'élément tranchant comportant des dents d'accroche, et la

Figure 5 montre un détail du bord tranchant de l'élément tubulaire.

Le dispositif 1 représenté comporte une première pièce de révolution dite extérieure 10 dont la partie supérieure présente un rebord 11 et la partie inférieure 12 un chanfrein d'aiguisage symétrique 13.

Cette même partie inférieure 12 comprend également une fente 14 chanfreinée en 15. Cette fente a une largeur telle que l'arc sous-tendu correspondant à cette fente en arc de cercle soit égal au "diamètre" de la pièce de révolution 20 dite intérieure. Celle-ci peut coulisser dans une entretoise alésée 21 qui vient prendre appui sur le rebord 11 de la pièce de révolution extérieure 10.

A l'extrémité supérieure 22 on dispose une garde 23 alésée intérieurement au diamètre interne de la pièce de révolution intérieure. La hauteur de la garde correspondant au moins à la hauteur du ressort 25 à spires non jointives totalement comprimé. Ce ressort est monté coaxial avec la pièce de révolution intérieure 20.

La hauteur de la pièce de révolution intérieure 20 est telle que lorsque la garde vient en appui sur la partie supérieure de l'entretoise alésée 21 l'extrémité inférieure 26 à chanfrein d'aiguisage 27 soit au niveau de la fente 14. Dans cette fente, on fait pénétrer une lame 30 déplaçable en translation suivant un axe perpendiculaire à l'axe longitudinal de la pièce de révolution intérieure et/ou extérieure. Cette lame est vissée en 31 sur un bloc coulissant 32, en matériau polymère, monté sur un support 33 dont l'axe est nécessairement perpendiculaire à l'axe longitudinal de la pièce de révolution intérieure et/ou extérieure. Ce support est fixé sur une patte 34 solidaire de la pièce de révolution extérieure par exemple à l'aide d'une soudure.

Une poignée 35 permet le maintien par l'utilisateur de l'ensemble du dispositif 1.

Le fonctionnement d'un tel dispositif consiste à prendre une tranche épaisse 49 d'un fruit ou légume et après avoir reculé à fond la lame 30 par coulissement arrière du bloc 32, on exerce un effort sur la tranche par appui de la pièce extérieure 10 sur cette tranche suivant la flèche 45 ce qui conduit à une première découpe 50 postérieurement, mais en réalité quasiment simultanément, on appuie sur la partie supérieure 22 de la pièce intérieure 20 à l'encontre du ressort suivant la flèche 46, ce qui découpe la matière intérieurement avec création d'un noyau 51. Le troisième mouvement consiste à faire translater le bloc 32 vers les pièces de révolution suivant la flèche 47 faisant passer la lame à travers la fente 14 guidée par les chanfreins 15 puis au travers de la matière constituant la tranche 44. Le noyau est ainsi découpé à sa base et cette découpe laisse subsister à travers la paroi une fente 52. La pièce 20 et le noyau 51 sont ramenés dans la position initiale suivant la flèche 48 ainsi que la lame 30 qui est retirée suivant la flèche 49. On obtient alors un fond à garnir 2.

Il est entendu que les opérations de découpe interne et transversales peuvent être inversées. De même, les deux pièces de révolution peuvent être fixes et un éjecteur à double action permettrait de chasser le fond et le noyau interne découpé. De même on peut relier les parties mobiles de façon qu'un seul déplacement par exemple du bloc et de sa lame, entraîne simultanément la pièce de révolution intérieure.

De telles modifications doivent être considérées comme incluses dans le contenu de la présente invention.

En outre, la forme peut être modifiée à volonté et le choix des matériaux seront effectués par l'homme de l'art de façon à respecter la législation et suivre les normes en vigueur dans le domaine des technologies alimentaires. On peut également donner aux pièces de révolution un angle de façon à les rendre légèrement coniques, ce qui facilite le retrait des pièces, le noyau et le fond à garnir lui-même.

La présente invention, definie par les revendications, n'est pas limitée aux exemples de réalisation qui viennent d'être décrits, elle est au contraire susceptible de modifications et de variantes qui apparaîtront à l'homme de l'art.

C'est ainsi que l'on peut réaliser des formes variées (ronds, ovales, carrés, rectangles, trapèzes, étoiles et toute section polygonale) par la seule forme des pièces de révolution.

On comprend également qu'un tel dispositif peut être automatisé à l'aide de vérins hydrauliques et d'un automate de pilotage. Une telle automatisation est à la portée du technicien du domaine considéré et ne modifie pas l'invention ni dans son dispositif, ni dans son résultat.

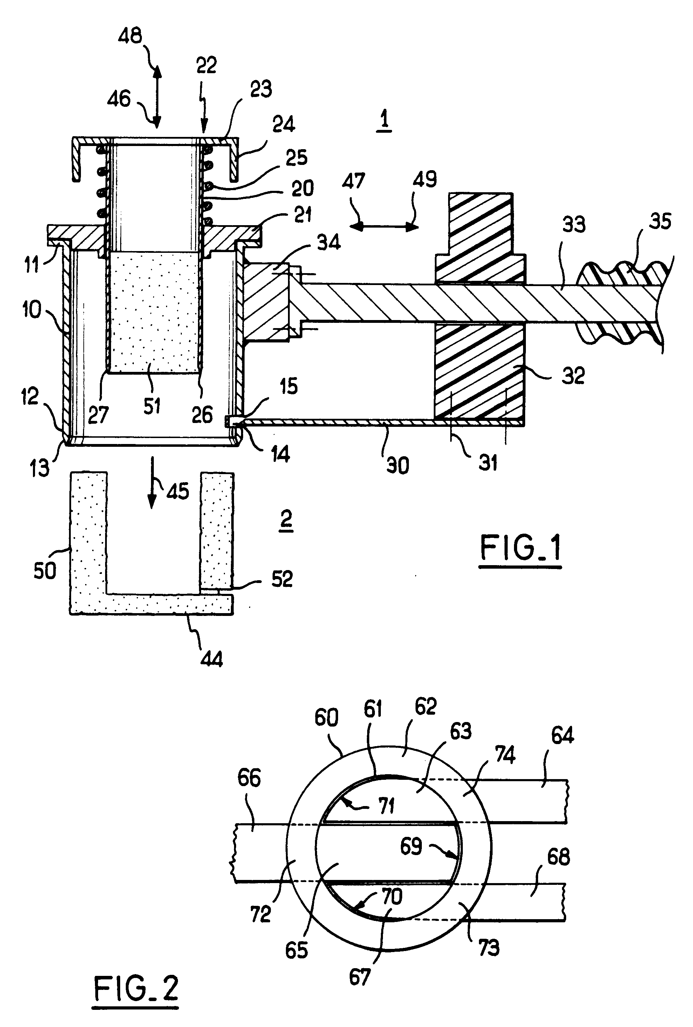

La figure 2 montre une forme de réalisation particulière de la lame 30 (figure 1) en action sur une découpe 62, limité par des surfaces intérieure 61 et extérieure 60. La lame est partagée en trois éléments de coupe 64, 66, 68, dont les extrémités tranchantes 69, 70, 71 ont traversé la découpe 62 en produisant trois fentes 72, 73 et 74 de dimensions réduites par rapport à la fente 52 de la figure 1, telle que la stabilité de la découpe 62 est augmentée. Les éléments de coupe 64 et 68 pénètrent la découpe 62 de droite, l'élément 66 de gauche jusqu'à ce que les bords de coupe 69, 70, 71 touchent le contour de la surface intérieure 61. Les éléments de coupe 64, 66, 68 peuvent comporter au moins au niveau des parties 63, 65 et 67 de bords biseautés pour faciliter leur jeu et pour prévoir un guidage.

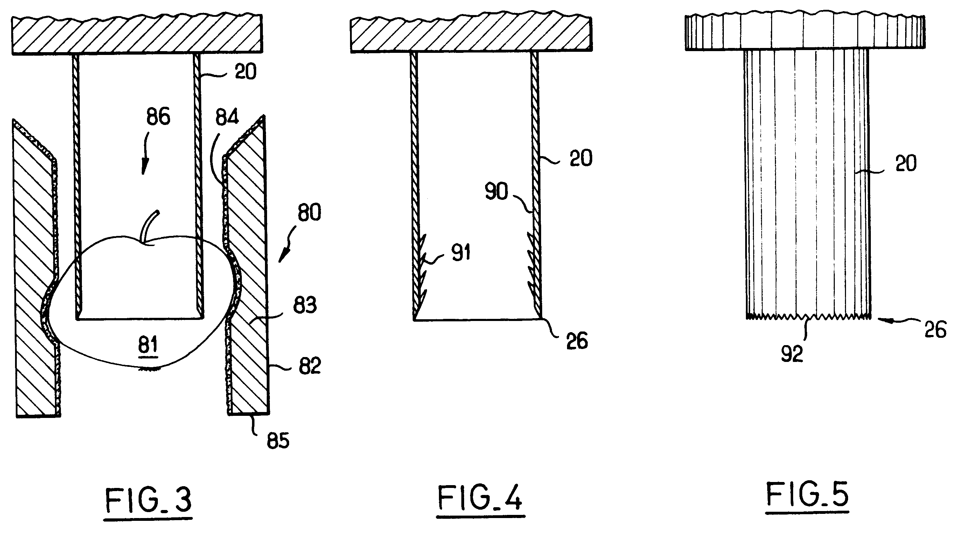

La figure 3 montre le moyen de maintien 80 pour le fruit ou légume à découper.

Un cylindre rigide 82 comporte à sa surface intérieure un revêtement 83 en mousse couvert à sa surface intérieure d'un tuyau flexible et élastique 84. Le cylindre 82 comporte à son extrémité inférieure un anneau de support 85 pour soutenir le revêtement 83 lors du déplacement du fruit 81 par un piston (non représenté), qui, dans un premier temps enfonce le fruit de façon délicate dans l'ouverture 86, se retire pour faire la place pour l'élément tranchant tubulaire 20 afin de permettre le découpage du fruit 81 et qui revient après la rétraction de l'élément 20 pour dégager le fruit du moyen de maintien 80 par le bas.

L'enfoncement des parties du revêtement 83 au niveau du fruit est bien entendu temporaire et garantit une stabilité suffisante du fruit pendant son découpage.

La figure 4 montre l'élément tranchant tubulaire 20 qui, à sa surface intérieure 90 comporte une pluralité de dents d'accroche 91 qui facilitent la rétraction du noyau découpé par le bord tranchant 26.

L'effet de ces dents d'accroche peut, dans certains cas être suffisant pour détacher le fond du noyau et le reste du fruit.

La figure 5 montre l'élément tranchant tubulaire 20 vu de l'extérieur, qui permet d'illustrer la formation du bord tranchant 26 comportant des dents de scie qui permettent de mieux couper les peaux de certains légumes, notamment des tomates.

L'élément tranchant tubulaire 20 peut être actionné en translation verticale simple ou avec une superposition d'une rotation.

**Revendications**

1. Dispositif de découpe de matière alimentaire primaire, notamment en fonds à garnir, comportant un élément tranchant tubulaire (20) se déplaçant en translation, destiné à découper des parois latérales d'un évidement dans la matière à découper par son bord tranchant inférieur (26) ainsi qu'un moyen de détachement capable d'effectuer le détachement du fond d'un noyau (51) découpé par l'élément tubulaire (20), caractérisé en ce que le moyen de détachement est constitué d'au moins un des mécanismes suivants :

   - un moyen de coupe transversale comportant au moins une lame (30; 64, 68, 72) se déplaçant dans une direction perpendiculaire au déplacement de l'élément tranchant tubulaire (20) et traversant la paroi latérale de l'évidement créée par le déplacement dudit élément tubulaire (20);

   - un moyen de dépression coopérant avec une partie supérieure de l'élément tranchant tubulaire (20) afin de créer une dépression permettant d'enlever ledit noyau (51) lors de la rétraction de l'élément tubulaire (20) hors de la matière à découper, et

   - une configuration particulière de la surface intérieure de l'élément tubulaire (20) comportant des dents (91), orientées dans la direction de la rétraction de l'élément tubulaire.

2. Dispositif selon la revendication 1, caractérisé en ce qu'il comprend deux éléments tubulaires coaxiaux intérieur (20) et extérieur (10), l'élément intérieur (20) étant mobile par rapport à l'élément extérieur (10) et une lame (30) déplaçable par translation sur un support fixé à la patte (34) elle-même solidaire de l'élément extérieur, l'axe longitudinal du support étant perpendiculaire à l'axe longitudinal des éléments tubulaires intérieur et/ou extérieur.

3. Dispositif selon la revendication 2, caractérisé en ce que la lame (30) traverse par translation l'élément tubulaire extérieur (10) à travers une fente (14) munie de chanfreins (15), passe sous l'élément tubulaire intérieur (20), sa course de translation étant inférieure à la dimension transversale de l'élément tubulaire extérieur (10).

4. Dispositif selon la revendication 2, caractérisé en ce que l'élément tubulaire intérieur (10) est muni d'une garde (24) qui vient en butée sur une entretoise (21) elle-même en appui sur le rebord (11) de l'élément tubulaire extérieur (10).

5. Dispositif selon la revendication 4, caractérisé en ce que les deux éléments tubulaires en butée l'une par rapport à l'autre présentent une différence de hauteur égale à l'épaisseur du fond à garnir (2).

**6.** Dispositif selon la revendication 1 des revendications précédentes, caractérisé en ce que les éléments tubulaires (10) et (20) présentent un léger angle de conicité afin de faciliter le dégagement du noyau (51) et du fond à garnir (2).

**7.** Dispositif selon la revendication 2, caractérisé en ce que la forme de section de l'élément tubulaire intérieur (20) et/ou extérieur (10) est ronde, carrée, un losange ou toute autre forme décorative.

**8.** Dispositif selon la revendication 1, caractérisé en ce qu'il comprend un moyen de maintien (80) pour la matière à couper, notamment un légume ou un fruit (81) comportant un cylindre rigide (82) et un revêtement élastique (83) à l'intérieur du cylindre (82), ledit moyen de stabilisation et de maintien étant capable de maintenir le fruit ou légume (81) pendant l'action de l'élément tubulaire tranchant (20), un moyen de piston étant prévu, capable d'insérer et/ou ressortir ledit fruit ou légume (81) du moyen de maintien.

**9.** Dispositif selon la revendication 1, caractérisé en ce que le bord tranchant (26) de l'élément tubulaire comporte des dents de scie.

**10.** Dispositif selon la revendication 1, caractérisé en ce que la lame (30) comporte plusieurs éléments de coupe (64, 66, 68) qui pénètrent la découpe (62) au niveau de la hauteur du fond (44) de la découpe (62) par des endroits (72, 73, 74) séparés les uns des autres.

**11.** Dispositif selon la revendication 10, caractérisé en ce que la lame (30) comporte trois éléments de coupe.

**12.** Fond à garnir pour plats chauds ou froids réalisés à partir d'un fruit ou légume, caractérisé en ce qu'il était produit par un dispositif selon la revendication 1.

**13.** Fond selon la revendication 12, caractérisé en ce que la paroi verticale de la découpe (62) comporte au moins une fente (52, 72, 73, 77) sensiblement parallèle au plan du fond.

**Claims**

**1.** A device for cutting a primary food product, especially as a bottom to be garnished, including a sharp, translation moving, tubular element (20), adapted to cut side walls of a recess in the product to be cut by the lower sharp edge thereof (26) as well as a release means adapted to release the bottom of a core (51) cut by said tubular element (20), characterized in that said release means is provided with at least one of the following mechanisms :

. a transverse cutting meansincluding at least a blade (30, 64, 68, 72) moving in a direction orthogonal to the sharp tubular element (20) displacement and passing through the side wall of the recess formed by said tubular element (20) displacement ;

. a depression means cooperating with an upper portion of said sharp tubular element (20) in order to form a depression which allows said core (51) to be removed when said tubular element (20) retracts from the product to be cut, and

. a particular configuration of the internal surface of said tubular element (20) including theeth (91) oriented in the direction of said tubular element retracting.

**2.** The device of claim 1, characterized in that it includes two internal (20) and external (10) coaxial elements, said internal element (20) being movable in respect to said external element (10), and a blade (30) translationally movable onto a support fixed to a lug (34) integral with said external element, with the longitudinal axle of said support being orthogonal to the longitudinal axle of said internal and/or external tubular elements.

**3.** The device of claim 2, characterized in that said blade (30) translationally passes through said external tubular element (10) through a slot (14) provided with bevelled edges (15), passes under said internal tubular element (20), the translation travel thereof being lower than the transverse dimension of said external tubular element (10).

**4.** The device of claim 2, characterized in that said internal tubular element (10) is provided with a guard (24) which comes into abutment with a cross-piece (21) which bears itself onto flange (11) of said external tubular element (10).

**5.** The device of claim 4, characterized in that both tubular elements in abutment one another show a height difference equal to the thickness of the bottom to be garnished (2).

**6.** The device of claim 1, characterized in that said tubular elements (10) and (20) show a slight taper angle with a view to making easier releasing said core and said bottom to be garnished (2).

7.  The device of claim 2, characterized in that said internal (20) and/or external (10) tubular elements are of round, square or diamond shape, or have any other decorative configuration.

8.  The device of claim 1, characterized in that it includes a maintaining means (80) for holding said product to be cut, especially a vegetable or a fruit (81), comprising a rigid cylinder (82) and a resilient coating (83) inside said cylinder (82), with said stabilizing and maintaining means being able to hold said vegetable or fruit (81) when said sharp tubular element (20) is operating, a piston means being provided which is able to insert and/or to bring out said vegetable or fruit (81) from said maintaining means.

9.  The device of claim 1, characterized in that the sharp edge (26) of said tubular element includes saw teeth.

10.  The device of claim 1, characterized in that said blade (30) includes several cutting elements (64, 66, 68) which penetrate into the cut-out (62) past the height of said cut-out (62) bottom (44) through spaced locations (72, 73, 74).

11.  The device of claim 10, characterized in that said blade (30) includes three cutting elements.

12.  A bottom to be garnished for hot or cold courses obtained from a fruit or a vegetable, characterized in that it has been produced by means of a device according to claim 1.

13.  The bottom of claim 12, characterized in that the vertical wall of said cut-out (62) includes at least a slot (52, 72, 73, 77) substantially parallel to the bottom plane.

**Patentansprüche**

1.  Vorrichtung zum Schneiden eines Lebensmittelgrundmaterials, insbesondere von Garnierböden, bestehend aus einem verschiebbaren, rohrförmigen Schneidelement (20) zum schneiden von Seitenwänden einer Ausnehmung in einem zu schneidenden Material mittels seiner unteren Schneidkante (26), und einer Abtrenneinrichtung zum Abtrennen des Bodens von einem Kern (51), der mittels des rohrförmigen Elements (20) geschnitten ist,
    **dadurch gekennzeichnet,** daß
    die Abtrenneinrichtung aus wenigstens einem der folgenden Mechanismen besteht:
    -   einer Querschneideinrichtung, die wenigstens eine Klinge (30; 64, 68, 72) aufweist, die senkrecht zur Verschiebung des rohrförmigen Elements verschiebbar ist und die Seitenwand der durch die Verschiebung des rohrförmigen Elements (20) gebildeten Ausnehmung durchquert;
    -   Unterdruckeinrichtung, die mit einem oberen Teil des rohrförmigen Schneidelements (20) zusammenwirkt, um einen Unterdruck zu erzeugen und den Kern (51) beim Zurückziehen des rohrförmigen Elements (20) außernalb des zu schneidenden Materials anheben zn können, und
    -   einer besonderen Formgebung der inneren oberfläche des rohrförmigen Schneidelements (20), die Zähne (91) aufweist, die in Richtung der Zurückziehung des rohrförmigen Elements orientiert sind.

2.  Vorrichtung nach Anspruch 1,
    **gekennzeichnet durch**
    zwei koaxiale rohrförmige Elemente, nämlich einem inneren (20) und einem äußeren (10), von denen das innere Element (20) bezüglich des äußeren Elements (10) beweglich ist und eine Klinge (30) die auf einer Unterlage verschiebbar ist, die an Flansch (34) befestigt ist, der mit dem äußeren Element verbunden ist, wobei die Längsachse der Unterlage senkrecht zur Längsachse des inneren und/oder äußeren rohrförmigen Elements verläuft.

3.  Vorrichtung nach Anspruch 2,
    **dadurch gekennzeichnet,** daß
    die Klinge (30) durch Verschiebung das äußere rohrförmige Element (10) durch einen Schlitz (14) durchquert, der mit Abschrägungen (15) versehen ist, und unter das innere rohrförmige Element (20) läuft, wobei seine Verschiebebahn kleiner als die Querabmessung des äußeren rohrförmigen Elements (10) ist.

4.  Vorrichtung nach Anspruch 2,
    **dadurch gekennzeichnet,** daß
    das innere rohrförmige Element (20) mit einer Kappe (24) versehen ist, die an einer Querversteifung (21) zur Anlage kommt, die am nach außen umgebogenen Rand (11) des äußeren rohrförmigen Elements (10) anliegt.

5. Vorrichtung nach Anspruch 4,
**dadurch gekennzeichnet,** daß
die beiden rohrförmigen Elemente relativ zueinander im Anschlag befindlich eine Höhendifferenz gleich der Dicke des Garnierbodens (2) haben.

6. Vorrichtung nach Anspruch 1,
**dadurch gekennzeichnet,** daß
die rohrförmigen Elemente (10) und (20) einen geringen Konizitätswinkel haben, um das Lösen des Kerns (51) und des Garnierbodens (2) zu erleichtern.

7. Vorrichtung nach Anspruch 2,
**dadurch gekennzeichnet,** daß
die Querschnittsform des inneren und/oder äußeren rohrförmigen Elements (101, 20) rund, quadratisch oder rautenförmig ist oder jede andere dekorative Form hat.

8. Vorrichtung nach Anspruch 1,
**gekennzeichnet durch**
eine Halteeinrichtung (80) für das zu schneidende Material, insbesondere ein Gemüse oder ein Obst (81), einen starren Zylinder (82) und eine elastische Auskleidung (83) im Zylinder (2), wobei die Stabilisierungs- und Halteeinrichtung das Obst oder Gemüse (81) während der Betätigung des rohrförmigen Sschneidelements (20) halten kann, und wobei eine Kolbeneinrichtung vorgesehen ist, die das Obst oder Gemüse (81) in die Halteeinrichtung einschieben und/oder aus ihr entfernen kann.

9. Vorrichtung nach Anspruch 1,
**dadurch gekennzeichnet,** daß
die Schneidkante (26) des rohrförmigen Elements Schneidezähne aufweist.

10. Vorrichtung nach Anspruch 1,
**dadurch gekennzeichnet,** daß
die Klinge (30) mehrere Schneidelemente (64, 66, 68) aufweist, die in den abgeschnittenen Teil (62) in Höhe des Bodens (44) des abgeschnittenen Teils (62) an von einander entfernten Stellen (72, 73, 74) eindringen.

11. Vorrichtung nach Anspruch 10,
**dadurch gekennzeichnet,** daß
die Klinge (30) drei Schneidelemente aufweist.

12. Boden zum Garnieren von warmen oder kalten Platten, die ausgehend von einem Obst oder Gemüse hergestellt sind
**dadurch gekennzeichnet,** daß

er mittels einer Vorrichtung nach Anspruch 1 hergestellt ist.

13. Boden nach Anspruch 12,
**dadurch gekennzeichnet,** daß
die vertikale Wand des abgeschnittenen Teils (62) wenigstens einen Schlitz (52, 72, 73, 77) im wesentlichen parallel zur Ebene des Bodens aufweist.

FIG.1

FIG.2

FIG.3    FIG.4    FIG.5

EP 0 288 383 B1